# EUROPEAN PATENT SPECIFICATION

(11) **EP 4 386 641 B1**
(45) Date of publication and mention of the grant of the patent: **02.07.2025**
(21) Application number: 23213967.5
(22) Date of filing: 04.12.2023
(51) Int. Cl.: G06Q 10/0631, G06F 30/13, G06Q 10/0639, G06Q 50/08

(54) **CONSTRUCTION MANAGEMENT METHOD AND SYSTEM FOR TOUGH TUNNEL STRUCTURE**
BAUVERWALTUNGSVERFAHREN UND -SYSTEM FÜR ROBUSTE TUNNELSTRUKTUR
PROCÉDÉ ET SYSTÈME DE GESTION DE CONSTRUCTION POUR STRUCTURE DE TUNNEL RÉSISTANT

(30) Priority: 15.12.2022 CN 202211609676
(43) Date of publication of application: 19.06.2024
(73) Proprietor: Shenzhen University, Shenzhen, Guandong 518061 (CN)
(72) Inventor: BAO, Xiaohua, Shenzhen, Guangdong, 518061 (CN); CHEN, Xiangsheng, Shenzhen, Guangdong, 518061 (CN); CUI, Hongzhi, Shenzhen, Guangdong, 518061 (CN); SHEN, Jun, Shenzhen, Guangdong, 518061 (CN)
(74) Representative: Balder IP Law, S.L.

(56) References cited:
- CN-A- 112 943 364
- CN-A- 114 201 798
- DE-A1- 102021 201 195
- DE-U1- 202021 104 366
- US-A1- 2021 224 929

## Description

### TECHNICAL FIELD

The present application relates to the technical field of tunnel engineering, in particular, to a construction management method and system for resilient tunnel structure.

### BACKGROUND

At present, with rapid economic development in China, demands for underground tunnel building are growing. The expansion of the tunnel building area puts forward higher requirements for tunnel building, especially in areas with high seismic fortification intensity. Improving the seismic performance of tunnels is a major issue the tunnel construction faces. Therefore, in the tunnel construction design, it is very important to reasonably improve the resilience of the tunnel structure.

The existing improvement of the resilience of the tunnel structure mainly relies on the suitable materials with improved resilience developed by designers to produce the required components of the tunnel, which are then spliced to the tunnel under remote control by machines.

DE 10 2021 201195A1 discloses a Method and arrangement for quality control of cast concrete elements for a building structure, a recipe for the concrete element to be produced, liquid data for the production of the concrete element are provided, design data for the concrete element to be produced, temperature data from temperature sensors mounted in and/or on the concrete element, humidity data from humidity sensors mounted in and/or on the concrete element, environmental data for the building structure by a weather station and/or a weather data provider, and knowledge data for concrete production are provided. The data provided is recorded in a digital twin for the building structure on a suitable server, and the data provided is analyzed by an analysis engine to determine the state of the concrete element in the digital twin, in particular to determine a setting state and/or the setting time of the concrete element.

In view of the related technologies mentioned above, the inventors found the following defects: on the one hand, the components produced blindly may not be suitable for the current tunnel, resulting in production of unsuitable components; on the other hand, in the process of remote splicing components it is also easy to make mistakes in splicing due to personnel negligence and other reasons,, which affects the formation of the tunnel.

### SUMMARY

The invention is defined in appended claims 1 and 10.

In order to improve the reasonable accuracy and efficiency of the construction of ductile tunnel structures, a construction management method and system for resilient tunnel structures are disclosed.

In the first aspect, a construction management method for resilient tunnel structure is disclosed, which adopts the following technical solution:

A construction management method for resilient tunnel structure, including:
obtaining production parameter information of components at different positions of a preset tunnel structure, the production parameter information includes material information and structure information applied to the components;
analyzing and determining a production management scheme of the components according to a correspondence between the production parameter information and the production management scheme of the components at different positions of the preset tunnel structure, the production management scheme is to schedule production of the components according to digital twin models corresponding to the components at different planed production stages and periods;
executing the production management scheme of the components;
forming the components at different positions of the tunnel structure;
analyzing and determining an overall splicing scheme of the components according to a splicing environment of preset components at different positions, splicing object components of the components at different positions, and a correspondence between the preset components at different positions and splicing schemes in different environments;
executing the overall splicing scheme of the components;
forming the tunnel structure.

By adopting the above-mentioned technical scheme, the production management scheme of the components at different positions of the tunnel structure can be effectively determined. In addition, the production management scheme herein adopts the digital twin model, which better guarantees the timely and effective production of the components. And then an overall splicing scheme of the corresponding components is developed under considering the location and environment for the formed components, which effectively ensures the formation of the tunnel structure.

Optionally, a step of obtaining production parameter information of components at different positions of a preset tunnel structure includes:
obtaining environment information applied to the tunnel structure;
analyzing and determining a preliminary production structure of the components at different positions of the tunnel structure according to a correspondence between the environment information applied to the tunnel structure and the preliminary production structure of the components at different positions of the tunnel structure;
obtaining a test result of the production structure of different materials after all performance tests;
analyzing and determining an integrative test score for the production structure of different materials according to a correspondence between the test result and a test score, a correspondence between environment information applied to preset different tunnel structures and weights of different performance tests, and test scores of the production structure of different materials after all performance tests;
selecting a material with the highest comprehensive test score as a material applied to the production structure;
forming the production parameter information according to the material applied to the production structure and the preliminary production structure;
analyzing and determining a calibration scheme according to a correspondence between the production parameter information formed and the calibration scheme;
executing the calibration scheme of the production parameter information;
obtaining the production parameter information of the components at different positions of the tunnel structure after executing the calibration scheme of the production parameter information.

By adopting the above technical solution, on the one hand, the preliminary production structure applied in the corresponding environment is determined according to the environment information applied to the tunnel structure, and on the other hand, the material with the best test score is determined according to the test scores of different materials of the production structure. The production parameter information can be determined based on the determination of the material and the preliminary production structure, and finally the calibration scheme corresponding to the production parameter information will be developed.

Optionally, the construction management method for resilient tunnel structure further includes steps after a step of obtaining production parameter information of the components at different positions of the tunnel structure after executing the calibration scheme of the production parameter information, as follows:
analyzing and determining an arrangement scheme of a relevant detection device according to a correspondence between the production parameter information of the components and the arrangement scheme of the relevant detection device;
executing the arrangement scheme of the relevant detection device;
constructing a complete arrangement information of all the components according to the arrangement scheme of the relevant detection device, and the production parameter information of the components at different positions of the tunnel structure after executing the calibration scheme of the production parameter information.

By adopting the above technical solution, it is fully considered that in addition to the component layout, it is also necessary to consider the parameters in the subsequent component use process to obtain parameter information in the use process, so as to better ensure the normal use of the component, so the relevant detection is set The device layout plan is used to obtain the production parameter information of components in different positions.

Optionally, the construction management method for resilient tunnel structure further includes steps after a step of constructing a complete arrangement information of all the components as follows:
analyzing and obtaining an accuracy level of the complete arrangement information of the components;
developing an automatic generation plan of component parameterization model according to the accuracy level of the complete arrangement information of the components and the automatic generation plan of parameterization model.

By adopting the above technical solution, it is fully considered that the complete arrangement information of the components is provided with accuracy level. The component parameterization model representation will be realized according to the corresponding accuracy level, so that the parameterization model scheme of the components to be represented meets the actual demands.

Optionally, a step of analyzing and determining a production management scheme of the components according to a correspondence between the production parameter information and the production management scheme of the components at different positions of the preset tunnel structure includes:
acquiring a 3D scene information applied to a current tunnel structure;
querying a tunnel structure applied to a corresponding 3D scene information history;
analyzing and determining the production management scheme of the components according to the correspondence between the production parameter information and the production management scheme of the components at different positions of the preset tunnel structure, if the tunnel structure queried and applied is consistent with the current tunnel structure;
if the tunnel structure queried and applied is not consistent with the current tunnel structure, analyzing and obtaining same positions and different positions of the two tunnel structures, marking the same and different positions of the two tunnel structures as a notification message, and sending the notification message to the terminal held by person in charge;
if nothing is found, analyzing and obtaining a historical 3D scene information with the most parts identical to the 3D scene information applied to the current tunnel structure as reference 3D scene information, and obtaining remaining differences of the 3D scene information applied to the current tunnel structure;
searching for historical 3D scene information with same 3D scene information as the remaining differences from the remaining 3D scene information applied to the historical tunnel structure according to the remaining differences of the 3D scene information applied to the current tunnel structure, and obtaining a tunnel structure corresponding to respective remaining differences in the historical 3D scene information;
analyzing and determining the production management scheme of the components according to the tunnel structure corresponding to respective remaining differences in the historical 3D scene information, a tunnel structure corresponding to a same part of the 3D scene information applied to the current tunnel structure contained in the reference 3D scene information, and the correspondence between the production parameter information and the production management scheme of the components at different positions of the preset tunnel structure.

By adopting the above technical solution, during analyzing and determining the production management scheme of the components, it can be analyzed whether the production management scheme of the components can be obtained from the tunnel structure applied to the corresponding 3D scene information history. Especially when it cannot be directly found, the overall tunnel structure will be analyzed in combination with individual parts in the historical 3D scene information identical to the current tunnel structure, and the production management scheme corresponding to the overall tunnel structure will be determined.

Optionally, a step of analyzing and obtaining same positions and different positions of the two tunnel structures, marking the same and different positions of the two tunnel structures as a notification message, and sending the notification message to the terminal held by person in charge includes:
obtaining the different positions of the two tunnel structures;
analyzing and obtaining component combinations at the different positions;
analyzing and determining an overall use safety and reliability of the component combinations according to a correspondence between the component combinations and the overall use safety reliability;
loading the notification message with the same positions and the different positions as an annotation, while loading the notification message with a component combination with higher overall use safety and reliability as a recommended message, and sending the annotation and the recommended message to the terminal held by person in charge.

By adopting the above technical solution, it is further considered that when the same positions and the different positions of the two tunnel structures are sent to the person in charge, the problem of overall safety and reliability would occur in different component combinations. At this time, the person in charge will be informed with the overall use safety of the current component combinations.

Optionally, a step of analyzing and determining an overall use safety and reliability of the component combinations according to a correspondence between the component combinations and the overall use safety reliability includes:
obtaining a distribution probability of natural disasters in an area of the 3D scene information where the tunnel structure is located;
analyzing and determining an overall use safety and reliability of the component combinations under different types of natural disasters according to a correspondence between natural disaster types, component combinations and the overall use safety and reliability;
analyzing and determining the effective overall use safety and reliability of the component combination as a current overall safety and reliability of the component combinations according to the distribution probability of natural disaster in the area of the 3D scene information where the tunnel structure is located and the overall use safety and reliability of the component combinations under different types of natural disasters.

By adopting the above technical scheme, it is further considered the relationship between the overall use safety and reliability of the component combinations and the types of natural disasters. The overall use safety and reliability of the component combinations herein can be effectively analyzed and determined in combination with the distribution probability of natural disaster in the area of the 3D scene information where the tunnel structure is located, re types of natural disasters, the component combinations.

Optionally, the construction management method for resilient tunnel structure also includes steps parallel with a step of executing the production management scheme of the components, as follows:
obtaining a stage of the production management scheme of the components being executed, the stage of the production scheme includes+- a production stage and a transportation stage;
starting a detection device for component production parameter prearranged on the components for detecting material information and structure information of the components, and obtaining component production parameter information in real time, if the production management scheme of the components being executed is in the production stage;
comparing the production parameter information and a time node of the component obtained in real time with a preset production parameter information and a preset time node,
if a comparison result is consistent, maintaining the production scheme being executed unchanged;
if the comparison result is inconsistent, retracing, whether the production parameter information of the components obtained in real time is a preset historical production parameter information,
if yes, judging, if an actual production speed of the components is lower than a preset standard or exceeds the preset standard;
if no, judging, there is a problem in a production of the components, and sending a notification message to the terminal held by person in charge in time;
if the production management scheme of the components being executed is in the transportation stage, tracking a position and a time node of the components in real time, analyzing and determining, whether the components have been transported to a preset position within a preset time period,
if yes, judging that the transportation of the components is completed,
if no, retracing a position where a position deviation of the components occurs, and sending the position to the terminal held by person in charge.

By adopting the above-mentioned technical scheme, the production management scheme being executed will be supervised according to the stage of the production management scheme of the components being executed, and the supervision results will be fed back to the person in charge in time.

In the second aspect, a construction management system for resilient tunnel structure is disclosed, which adopts the following technical solutions:
A construction management system for resilient tunnel structure includes a memory, a processor, and a program stored in the memory and being operable on the processor, the program can realize the construction management method for resilient tunnel structure according to the first aspect when being loaded and implemented by the processor.

By adopting the above technical scheme, the production management scheme of the components at different positions of the tunnel structure can be effectively determined by retrieving the above program. In addition, the production management scheme herein adopts the digital twin model, which better guarantees the timely and effective production of the components. And then an overall splicing scheme of the corresponding components is developed under considering the location and environment for the formed components, which effectively ensures the formation of the tunnel structure.

In summary, the beneficial technical effects of the present application are:
It is effectively ensured that the tunnel components are formed in accordance with the requirements during the production management process, so that the produced tunnel components can better meet the requirements;
the tunnel components are more accurate during splicing to form the tunnel structure.

### BRIEF DESCRIPTION OF THE DRAWINGS

FIG. 1 is a schematic overall flow chart of a construction management method for resilient tunnel structure according to an embodiment of the present application.
Fig. 2 is a schematic flow chart showing a step of obtaining production parameter information of the components at different positions of the preset tunnel structure according to another embodiment of the present application.
Fig. 3 is a schematic flow chart showing the steps after a step of constructing complete arrangement information of all the components according to another embodiment of the present application.
Fig. 4 is a schematic flow chart showing a step of analyzing and determining the production management scheme of the components according to a correspondence between the production parameter information and the production management scheme of the components at different positions of the preset tunnel structure according to another embodiment of the present application.
Fig. 5 is a schematic flow chart showing a step of analyzing and obtaining the same positions and the different locations of two tunnel structures, marking them as a notification message, and sending them to a terminal held by the person in charge according to another embodiment of the present application.
FIG. 6 is a schematic flow chart showing a step of analyzing and determining the overall use safety and reliability of component combinations according to the correspondence between the component combinations and the use overall safety and reliability according to another embodiment of the present application.
Fig. 7 is a schematic flow chart showing steps after a step of obtaining the tunnel structure corresponding to the respective remaining differences in the historical 3D scene information and before a step of analyzing and determining the production management scheme of the components according to another embodiment of the present application.
Fig. 8 is a schematic flow chart showing the steps parallel to a step of executing the production management scheme of the components according to another embodiment of the present application.
FIG. 9 is a schematic flow chart showing the steps after a step of maintaining the current production scheme unchanged according to another embodiment of the present application.

### DESCRIPTION OF THE EMBODIMENTS

The application will be described in further detail below in conjunction with the figures.

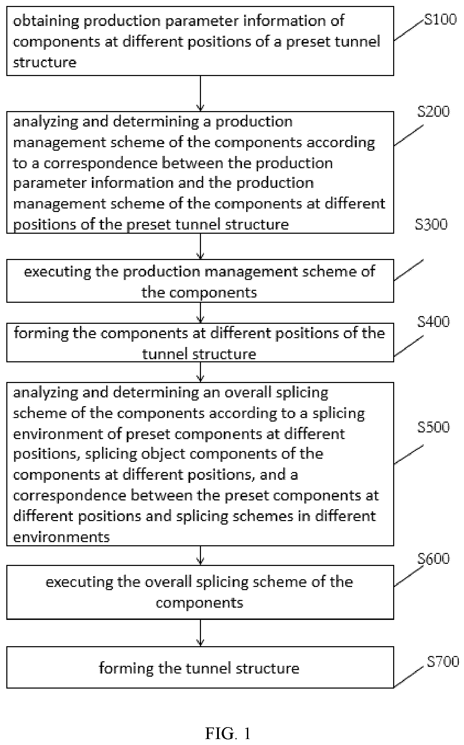

Referring to FIG. 1, a construction management method for resilient tunnel structure disclosed is shown, including:
Step S100, obtaining production parameter information of components at different positions of a preset tunnel structure.

Among them, the production parameter information includes material information and structure information applied to the components; the material information includes information such as reinforcement, mechanical properties and durability etc.; the structure information includes information such as structural form and 3D size etc..

The production parameter information of the components at different positions of the preset tunnel structure can be obtained by querying a database storing the production parameter information of the components at different positions of the preset tunnel structure.

Step S200, analyzing and determining a production management scheme of the components according to a correspondence between the production parameter information and the production management scheme of the components at different positions of the preset tunnel structure.

Among them, the production management scheme is to schedule production of the components according to digital twin models corresponding to the components at different planed production stages and periods. The production management scheme of the components is so analyzed and determined: the production parameters of the components at different positions of the preset tunnel structure are defined as a query object, which is obtained by querying a preset database that stores the correspondence between the production parameter information and production management scheme of the components at different positions of the preset tunnel structure.

It should be noted that the digital twin models corresponding to the components at different planned production stages and periods are the digital twin models for establishing a production factory of prefabricated tunnel structure based on BIM technology, which are combined with intelligent terminal equipment, the terminal intelligent display and interactive technology for studying key data information of the production of the preset tunnel structure, to facilitate users for management to obtain information, to plan management, to plan production, to conduct detection and monitoring, to store and transport the key information at each stage and to make rapid management decisions. The production parameters in the production process of the preset tunnel structure and the data of the equipment operating status are transmitted to the BIM system in real time, such that a real-time linkage with the digital model in the BIM system is realized, to realize the digital twin technology of the informationized prefabrication line of the preset tunnel structure. The production process of the entire preset tunnel structure (digital identity information of the preset tunnel structure) is stored in the server, which can realize the holographic tracking (quality tracking) of the historical manufacturing information of the preset tunnel structure in service. Combined with virtual reality technology, display in real time of the production line for tunnel structure realizes human-computer interaction with rapid positioning.

Based on the digital twin technology of the manufacturing line for preset tunnel structure, artificial intelligence and deep learning algorithms are used to optimize the production management of preset tunnel structures, by which usage of the available resources is maximized used to reduce unnecessary waste, such that the component costs are reduced. The quality tracking of the preset tunnel structure (including defect analysis) are managed and decided based on deep learning, a set of intelligent optimization and decision algorithms of the preset tunnel structure is provided.

Step S300, executing the production management scheme of the components.

Step S400, forming the components at different positions of the tunnel structure.

Step S500, analyzing and determining an overall splicing scheme of the components according to a splicing environment of preset components at different positions, splicing object components of the components at different positions, and a correspondence between the preset components at different positions and splicing schemes in different environments.

Among them, the analysis and determination of the overall splicing scheme of the components is as follows: the components at different positions of the tunnel structure, the splicing environment, and the splicing object components of the components at different positions are defined as common query objects, the overall splicing scheme is obtained by querying a preset database that stores the splicing environment of the components at different positions, the splicing object components of the components at different positions, the correspondence between the preset components at different positions and splicing schemes in different environments.

Step S600, executing the overall assembly scheme of the components.

Step S700, forming the tunnel structure.

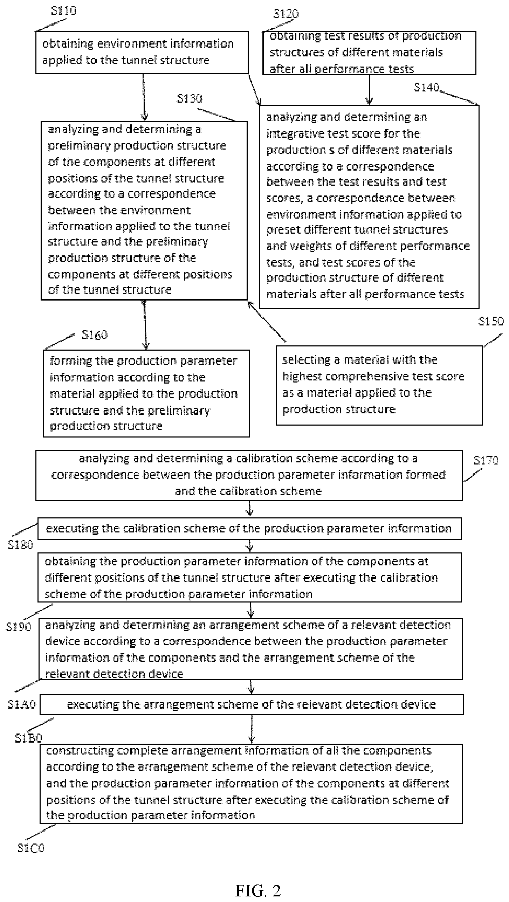

It is considered in step S100 of FIG. 1 that the production parameter information of the components at different positions of the preset tunnel structure includes material information and structure information, the material information must be determined through testing, and the structure information must be determined by comprehensively considering the parameters applied to the tunnel structure. It is necessary to further analyze the production parameter information of the components at different positions of the preset tunnel structure, which will be described in detail with reference to the embodiment shown in FIG. 2.

Referring to FIG. 2, a step of obtaining production parameter information of the components at different positions of the preset tunnel structure includes:
Step S110, obtaining environment information applied to the tunnel structure.

Among them, the environment parameter involved in the environment information applied to the tunnel structure are as follows: tunnel inner contour information, geological environment information, dynamic/static load information, working condition information, etc.

Wherein the environment information applied to the tunnel structure can be obtained by querying a database that stores the environment information applied to the tunnel structure.

Step S120, analyzing and determining a preliminary production structure of the components at different positions of the tunnel structure according to a correspondence between the environment information applied to the tunnel structure and the preliminary production structure of the components at different positions of the tunnel structure.

Among them, the analysis and determination of the preliminary production structure of the components at different positions of the tunnel structure is as follows: the environment information applied to the tunnel structure and the components at different positions of the tunnel structure are defined as common query objects, the preliminary production structure of the components at different positions of the tunnel structure is obtained by querying the preset database that stores a correspondence between the environment information applied to the tunnel structure and the preliminary production structure of the components at different positions of the tunnel structure.

Specifically, the preset database that stores a correspondence between the environment information applied to the tunnel structure and the preliminary production structure of the components at different positions of the tunnel structure is mainly formed through data analysis and processing in combination with corresponding normative theories, wherein the environment parameters are taken as input conditions while the key parameters of the preset tunnel component/structure design are taken as an output, to conduct the artificial intelligent training of preset tunnel component/structure design, so as to achieve the preliminary design of the artificial intelligent preset tunnel component/structure based on the environment parameters.

Step S130, obtaining a test result of production structures of different materials after all performance tests.

Among them, the performance tests mentioned in step S130 includes: 1.conducting an optimized design for the mix ratio of the steel fiber concrete such as the workability of steel fiber concrete slurry, the bonding performance between the steel fiber and cement mortar, the mechanical properties of the steel fiber concrete (compression resistance, tensile strength, shear resistance, flexural resistance etc.); 2. conducting a component performance comparison through the mechanical property test on the steel fiber concrete with little reinforcement and no reinforcement, as well as slab and beam components, and comparison of the result thereof with the ordinary reinforced concrete components, items to be compared include the flexural capacity, shear performance of oblique section, impact resilience, and fatigue properties of steel fiber reinforced concrete beams; the impact resilience, flexural capacity and shear performance of steel fiber reinforced concrete slabs, and the impact resilience of spliced steel fiber reinforced concrete pipe segments; 3. conducting impact Resilience test Research; 4. determining the mechanical properties of the pipe segments under the drawing force and bending moment through the drawing test and bending test on the pipe segments, to judge the safety and reliability of the pipe segments hoisting process; 5. conducting a drawing test on the steel fiber reinforced concrete pipe segments for the demoulding maintenance stage in the production process of the steel fiber reinforced concrete pipe segments, monitoring the drawing force and loading displacement test data, to obtain the maximal drawing force of the pre-buried hoisting hole of the steel fiber reinforced concrete pipe segments; conducting a bending test on the steel fiber reinforced concrete pipe segments for the lifting and handling during storage and transportation of the steel fiber reinforced concrete pipe segments, monitoring the surface stress, strain, mid-span deflection, rebar strain, and cracks of the steel fiber reinforced concrete during the test, to judge the mechanical properties of the pipe segments under bending moment; 6. judging and determining the optimized joint type of the steel fiber reinforced concrete pipe segments through the loading test on the joint: ①conducting a theoretical research on the failure mode of the joint of steel fiber pipe segments to ensure a simple structure, easy installation and a high bearing capacity of the joint of pipe segments, to prevent the joint of the pipe segments from being a weak point of the tunnel lining made of pipe segments; ② establishing a simulation model of the joints of pipe segments by using large general finite element software, to truly simulate the real force and deformation of various types of joints of pipe segments under different working conditions, to analyze the control factors of the strength of the joints of steel fiber reinforced concrete pipe segments with little reinforcements, and to analyze the key issues such as the mechanical property requirements of the joints of steel fiber reinforced concrete pipe segments without reinforcement on the steel fiber reinforced concrete materials; ③ producing the corresponding steel fiber reinforced concrete pipe segments for the new type of joint recommended by scientific payoffs, conducting tests to confirm the rigid head stiffness, mechanical properties, failure mode and ultimate bearing capacity of the joint of pipe segments; ④ comprehensively determining the optimal joint form of steel fiber reinforced concrete pipe segments based on theoretical and experimental research results.

Among them, the production structures of different materials refer to completely different materials, and also refers to steel fiber reinforced concrete members with different steel fiber contents and reinforcement ratios.

Wherein the test results of the production structures of different materials after all the performance tests refer to the specific test results after the above performance tests.

Step S140, analyzing and determining an integrative test score for the production structures of different materials according to a correspondence between the test results and the test scores, a correspondence between the environmental information applied to the preset different tunnel structures and weights of different performance tests, and the test scores of the production structures of different materials after all performance tests.

It should be noted that the test result is positively associated with the test score. The better the test result is, the higher the test score is. The test score is recorded as a fraction, each of the test results is corresponding to a respective one of the test scores. A correspondence between the test results and the test scores can be obtained by querying a preset database that stores the correspondence between the test results and test scores.

The integrative test score of the production structures of different materials is so analyzed and determined: calculating the product of the performance test scores and the weight of the corresponding performance test one by one, and then using the sum of all products as the integrative test score of the production structure of the corresponding material.

Step S150, selecting a material with the highest integrative test score as a material applied to the production structure.

Step S160, forming production parameter information according to the material applied to the production structure and the preliminary production structure.

Step S170, analyzing and determining a calibration scheme according to the correspondence formed between the production parameter information and the calibration scheme.

Among them, the calibration scheme refers to an finite element calculation based on the design results, and a calibration based on the corresponding specifications, to verify the working performance of the prefabricated tunnel components/structures; the production parameter information formed can be used as the query object by the calibration scheme, which can be obtained by querying a preset data bank that stores the correspondence between the production parameter information formed and the calibration scheme.

Step S180, executing the calibration scheme of the production parameter information.

Step S190, obtaining production parameter information of the components at different positions of the tunnel structure after executing the calibration scheme of the production parameter information.

Step S1A0, analyzing and determining the arrangement scheme of a relevant detection device according to a correspondence between the production parameter information of the components and the arrangement scheme of the relevant detection device.

Among them, the arrangement scheme of the relevant detection device specifically involves guiding an optimal arrangement of the corresponding multi-source sensors in the prefabricated tunnel components/structure based on the finite element analysis results, and completing a rapid modeling of the prefabricated structure of the tunnel main body based on the completed adaptive design, the 3D sizes of the prefabricated tunnel component/structure by the optimized arrangement of the sensors. The arrangement scheme of the relevant detection device is so analyzed and determined: by taking the production parameter information of the components as the query object, obtaining the arrangement scheme of the relevant detection device by querying a preset database that stores the correspondence between the production parameter information of the components and the arrangement scheme of the relevant detection device.

Step S1B0, executing the arrangement scheme of the relevant detection device.

Step S1C0, constructing complete arrangement information of all the components according to the arrangement scheme of the relevant detection device, and the production parameter information of the components at different positions of the tunnel structure after conducting the calibration scheme of the production parameter information.

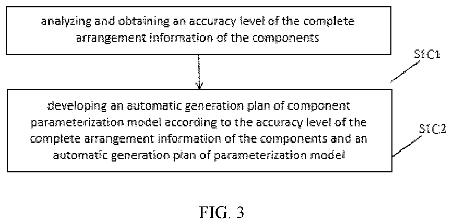

In step S1C0 of FIG. 2, not only the complete arrangement of the components is further considered, but also the accuracy of the complete arrangement information of the components must be taken into consideration for better representation with diagrams, which is illustrated in detail specifically referring to the embodiment shown in FIG. 3.

Referring to FIG. 3, a construction management method for resilient tunnel structure further includes steps after constructing complete arrangement information of all components, specifically as follows:

Step S1C1, analyzing and obtaining an accuracy level of the complete arrangement information of the components.

Wherein the accuracy level of the complete arrangement information of the components refers to the LOD level, as follows:
Level of Detail 100: LOD100 (concept graph);
Level of Detail 200: LOD200 (preliminary design result of the scheme);
Level of Detail 300: LOD300 (design drawing of details);
Level of Detail 400: LOD400 (construction drawing, acceptance and delivery);
Level of Detail 500: LOD500 (completion drawing).

Wherein the accuracy level of the complete arrangement information of the components is so analyzed and obtained: querying the accuracy level corresponding to the complete arrangement information of the components.

Step S1C2, developing a component parameterization model plan according to the accuracy level of the complete arrangement information of the components and an automatic generation plan of parameterization model.

Among them, the automatic generation plan of parameterization model refers to selection of appropriate parameter combination to realize the automatic generation of 3D parameterization model of the prefabricated tunnel component/structure with corresponding accuracy level, and to automatically complete fine drawings.

Developing a parameterization model plan of component is so completed, obtaining the parameterization model plan of component by querying a preset database that stores the correspondence between the accuracy level of the complete arrangement information of component and the automatic generation plan of parameterization model.

In addition, the overall tunnel geology, environment, and working condition information will be considered in the research on the manufacture of tunnel component/structure, so as to conduct a design check and specification calibration for the overall tunnel structure. If the tunnel performance does not meet the requirements, the prefabricated tunnel component/structure will be adaptively redesigned, and it is realized based on the generated 3D parametric model after the redesign that a newly adapted 3D parameterization model can be quickly and automatically generated based on the prefabricated model of the modified tunnel component/structure.

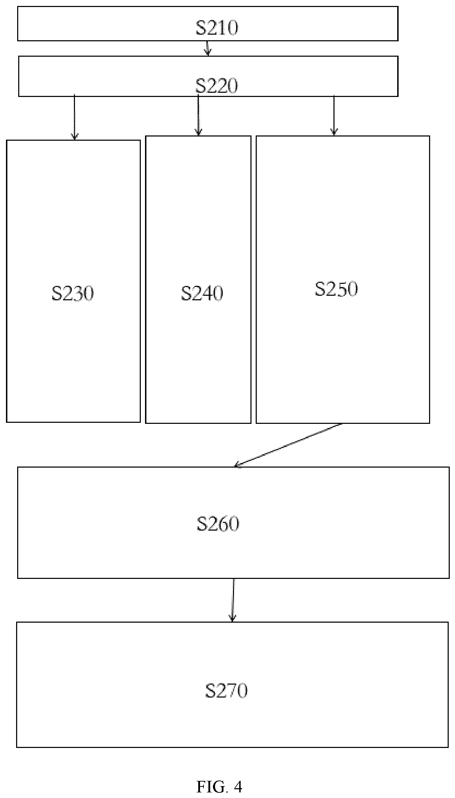

In step S200 of FIG. 1, it is further considered that the 3D scene information applied to the current tunnel structure cannot be directly queried from the tunnel structure applied to the corresponding 3D scene information history during analyzing and determining the production management scheme of component. At this time, it is necessary to make the best use of the comparison between the current tunnel structure and the tunnel structure applied to the 3D scene information history, to further analyze and determine the production management scheme of the components, which is illustrated in detail specifically referring to the embodiment shown in FIG. 4.

Referring to FIG. 4, a step of analyzing and determining a production management scheme of the components according to a correspondence between the production parameter information and the production management scheme of the components at different positions of the preset tunnel structure includes:
Step S210, acquiring the 3D scene information used in the current tunnel structure.

Among them, for example, the 3D scene information can be divided according to the scene environment, for example, into an underwater 3D scene, an underground 3D scene, and can also be planned according to other rules, which will not be elaborated here. The 3D scene information used in the current tunnel structure can be obtained by querying a preset database that stores the 3D scene information applied to the tunnel structures.

Step S220, querying a tunnel structure applied to a corresponding 3D scene information history.

Step S230, analyzing and determining the production management scheme of the components according to the correspondence between the production parameter information and the production management scheme of the components at different positions of the preset tunnel structure, if the tunnel structure queried and applied is consistent with the current tunnel structure.

Wherein the production management scheme of the components can be obtained by querying a preset database that stores a correspondence between the production parameter information and the production management scheme of the components at different positions of the tunnel structure.

Step S240, if the tunnel structure queried and applied is not consistent with the current tunnel structure, analyzing and obtaining same positions and different positions of the two tunnel structures, marking the same and different positions of the two tunnel structures as a notification message, and sending the notification message to a terminal held by person in charge.

Among them, the same positions and the different positions are defined to record the positions applied by two tunnel structures when the positions applied by the two tunnel structures are different. The terminal held by the person in charge can be a mobile phone, a computer, or other communicable devices.
Step S250, if nothing is found, analyzing and obtaining a historical 3D scene information with the most parts identical to the 3D scene information applied to the current tunnel structure as reference 3D scene information, and obtaining remaining differences of the 3D scene information applied to the current tunnel structure;
Step S260, searching for historical 3D scene information with same 3D scene information as the remaining differences from remaining 3D scene information applied to the historical tunnel structure according to the remaining differences of the 3D scene information applied to the current tunnel structure, and obtaining a tunnel structure corresponding to respective remaining differences in the historical 3D scene information;
Step S270, analyzing and determining the production management scheme of the components according to the tunnel structure corresponding to respective remaining differences in the historical 3D scene information, a tunnel structure corresponding to a same part of the 3D scene information applied to the current tunnel structure contained in the reference 3D scene information, and the correspondence between the production parameter information and the production management scheme of the components at different positions of the preset tunnel structure.

Among them, the production management scheme of the components is as follows: on the one hand, by taking the components contained in the tunnel structure corresponding to the respective remaining differences in the historical 3D scene information as query objects, obtaining production management scheme of this part of components from the correspondence between the production parameter information and production parameters of the components at different positions of the preset tunnel structure. On the other hand, by taking the tunnel structure corresponding to the same parts of the 3D scene information applied to the current tunnel structure contained in the reference 3D scene information as a query object, obtaining the production management scheme of this part of components, summarizing the production management schemes of the two parts of components, to obtain the complete production management scheme of the components.

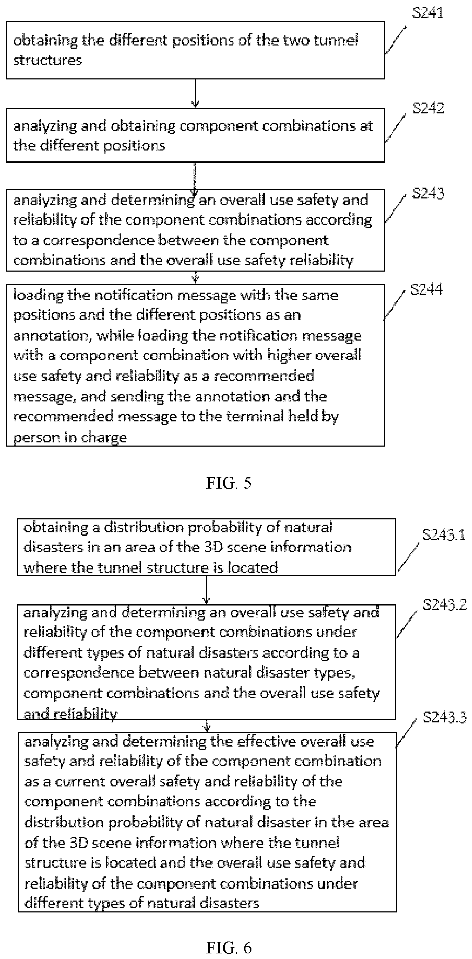

It is further considered in step S240 of FIG. 4 that it is necessary to notify the person in charge of the safety and reliability of different component combination when sending the same positions and the different positions of the two tunnel structures as a notification message to the terminal held by the person in charge, such that the person in charge can make a better selection of the tunnel structure, which will be described in detail with reference to the embodiment shown in FIG. 5.

Referring to FIG. 5, a step of analyzing and obtaining same positions and different positions of the two tunnel structures, marking the same and different positions of the two tunnel structures as a notification message, and sending the notification message to a terminal held by person in charge includes:

Step S241, obtaining different positions of the two tunnel structures.

Step S242, analyzing and obtaining component combinations at the different positions.

Wherein a component combination refers to the components that are intended to be used together, and the component combinations at the different positions can be obtained through system query.

Step S243, analyzing and determining the overall use safety and reliability of the component combinations according to a correspondence between the component combinations and the overall use safety and reliability.

Among them, the overall use safety and reliability of the component combination is so analyzed and determined: by taking the component combination as a query object, obtaining by querying a preset database that stores the correspondence between the component combinations and the overall use safety and reliability.

In step S244, loading the notification message with the same positions and the different positions as an annotation, while loading the notification message with the component combinations with high overall use safety and reliability as a recommended message, and sending them to the terminal held by the person in charge.

It is further considered in step S243 of FIG. 5 that it is necessary to further analyze and determine the overall use safety and reliability of the different positions because the natural disaster situation in the local area is to be considered when considering the overall use safety and reliability of the component combinations, which would be described in detail specially referring to the embodiment shown in FIG. 6.

Referring to FIG. 6, a step of analyzing and determining an overall use safety and reliability of the component combinations according to a correspondence between the component combinations and the overall use safety reliability includes:
Step S243.1, obtaining a distribution probability of natural disasters in an area of the 3D scene information where the tunnel structure is located.

Wherein the distribution probability of natural disasters in the area of the 3D scene information where the tunnel structure is located can be obtained by querying a preset database that stores the distribution probability of natural disasters in the area of the 3D scene information where the tunnel structure is located.

Step S243.2, analyzing and determining the overall use safety and reliability of the component combinations under different types of natural disasters types according to a correspondence between the natural disaster types, component combinations and overall use safety and reliability.

Among them, the natural disaster types can be flood or earthquake. The overall use safety and reliability of the component combinations under different types of natural disasters is so analyzed and determined: by taking the component combinations as a query object, obtaining the overall use safety and reliability of all the natural disaster types from a preset database that stores a correspondence between the natural disaster types, component combinations and the overall use safety and reliability.

Step S243.3, analyzing and determining an effective overall use safety and reliability of the component combination as a current use overall safety and reliability of the component combinations according to distribution probability of natural disasters in the area of the 3D scene information where the tunnel structure is located and the overall use safety and reliability of the component combinations under different types of natural disasters.

Among them, the effective overall use safety and reliability of the component combination is so analyzed and determined: multiplying the probability corresponding to each of the natural disaster and the overall use safety and reliability of the respective one of component combinations, and the sum of the obtained products is the overall use safety and reliability of all the natural disasters.

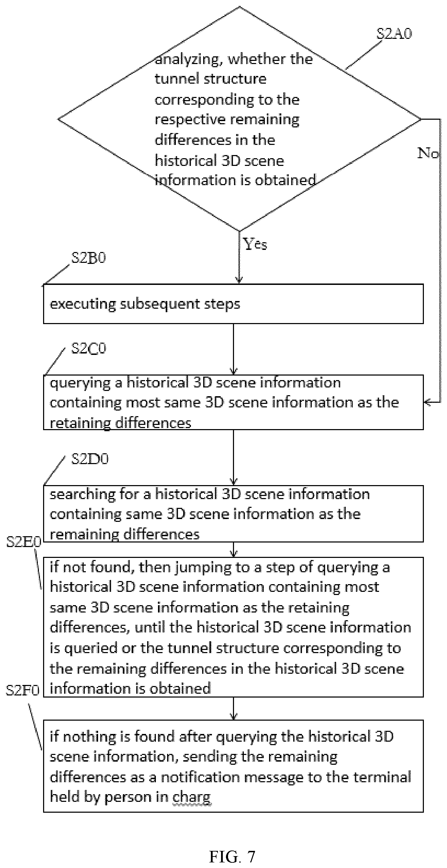

It is considered in steps S260 and S270 in FIG. 4 that a tunnel structure corresponding to the respective remaining differences in the historical 3D scene information may not be found. An analysis would be conducted according to the historical 3D Scene information which contains the most same 3D scene information as the remaining differences, once no tunnel structure corresponding to the respective remaining differences in the historical 3D scene information is found, which will be described in detail with reference to the embodiment shown in FIG. 7.

Referring to Fig. 7, a construction management method for resilient tunnel structure also includes steps after a step of obtaining a tunnel structure corresponding to respective remaining differences in the historical 3D scene information and before a step of analyzing and determining the production management scheme of the components, including:
Step S2A0, analyzing, whether the tunnel structure corresponding to the respective remaining differences in the historical 3D scene information is obtained. If yes, executing step S2B0; if no, executing step S2C0.
Step S2B0, executing subsequent steps.
Step S2C0, querying a historical 3D scene information containing most same 3D scene information as the retaining differences.
Step S2D0, searching for a historical 3D scene information containing same 3D scene information as the remaining differences.
Step S2E0, if not found, then jumping to a step of querying a historical 3D scene information containing most same 3D scene information as the retaining differences, until the historical 3D scene information is queried or the tunnel structure corresponding to the remaining differences in the historical 3D scene information is obtained;
Step S2F0, if nothing is found after querying the historical 3D scene information, sending the remaining differences as a notification message to the terminal held by person in charge.

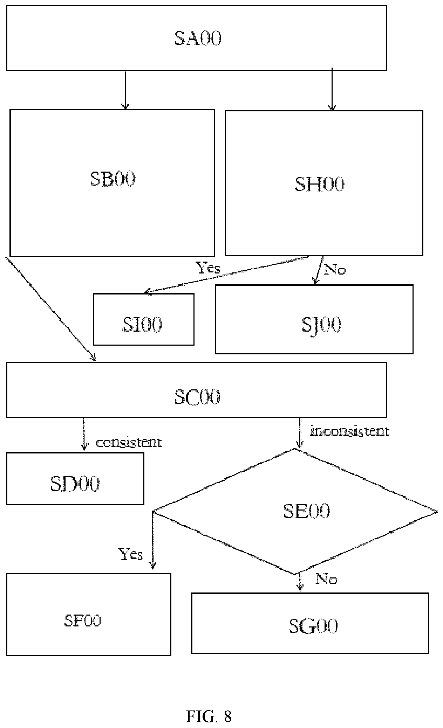

It is further considered in step S300 of FIG. 1 that during executing the production management scheme of the components the content executed at different stages of the production management scheme is different, thus it is necessary to effectively supervise the implementation effect of the production management scheme of the components, to further ensure the execution accuracy of the production management scheme of the component, which will be described in detail with reference to the embodiment shown in FIG. 8.

Referring to FIG. 8, a construction management method for resilient tunnel structure also includes steps parallel with a step of executing the production management scheme of the components, as follows:
Steps SA00, obtaining a stage of the production management scheme of the components being executed, the stage of the production scheme comprises a production stage and a transportation stage.
Steps SB00, starting a detection device for component production parameter prearranged on the components for detecting material information and structure information of the components, and obtaining component production parameter information in real time, if the production management scheme of the components being executed is in the production stage.

Wherein the detection device for component production parameter may be a height detection device, a strength detection device or an angle detection device.

Step SC00, comparing the production parameter information and a time node of the component obtained in real time with preset production parameter information and a preset time node. If a comparison result is consistent, executing step SD00; if the comparison result is inconsistent, executing step SE00.

Step SD00, maintaining the production scheme being executed unchanged.

Step SE00, retracing, whether the production parameter information of the components obtained in real time is preset historical production parameter information. If yes, executing step SF00; if no, executing step SG00.

Step SF00, judging, if an actual production speed of the components is lower than a preset standard or exceeds the preset standard.

Step SG00, judging, there is a problem in a production of the components, and sending a notification message to the terminal held by person in charge in time.

Step SH00, if the production management scheme of the components being executed is in the transportation stage, tracking a position and a time node of the components in real time, analyzing and determining, whether the components have been transported to a preset position within a preset time period. If yes, executing step SI00; if no, executing step SJ00.

Wherein whether the component has been transported to the preset position within the preset time period is so analyzed and determined: comparing whether the position where the component is located is consistent with the preset position.

Step SI00, judging that the transportation of the components is completed.

Step SJ00, retracing a position where a position deviation of the components occurs, and sending the position to the terminal held by person in charge.

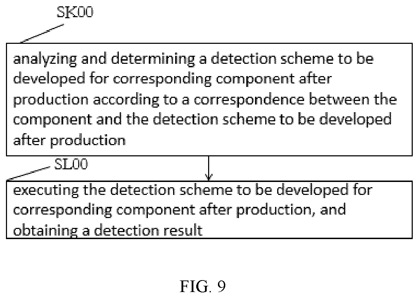

It should be considered after step SD00 in FIG. 8 that detection schemes for different components are different. Therefore, different detection schemes must be formed for different components, which is described in detail with reference to the embodiment shown in FIG. 9.

Referring to Fig. 9, a construction management method for resilient tunnel structure also includes steps after a step of the production scheme being executed unchanged, specifically as follows:
Step SK00, analyzing and determining a detection scheme to be developed for corresponding component after production according to a correspondence between the corresponding component and the detection scheme to be developed after production.

Among them, the detection scheme to be developed for corresponding component after production is so analyzed and determined: by taking the component as a query object, obtaining by querying a preset database that stores the correspondence between the corresponding component and the detection scheme to be developed after production.

Step SL00, executing the detection scheme to be developed for corresponding component after production, and obtaining a detection result.

It is further considered in step S500 of FIG. 1 that different splicing environments have influence on component installation, so it is necessary to develop different splicing schemes in combination different environments, which are described in detail with reference to the following embodiments.

A step of analyzing and determining an overall splicing scheme of the components according to a splicing environment of preset components at different positions, splicing object components of the components at different positions, and a correspondence between the preset components at different positions and splicing schemes in different environments is as follows:
Step S510, analyzing and obtaining the splicing environment of the components at different positions.
Step S520, if the splicing environment is an underwater environment, analyzing and determining an overall splicing scheme for the underwater environment according to a correspondence between the underwater environment and the splicing scheme for the underwater environment.
Step S530, if the splicing environment is an environment on shore, analyzing and determining an overall splicing scheme for the environment on shore according to a correspondence between the environment on shore and the splicing scheme for the environment on shore.
Step S540, analyzing and determining the overall splicing scheme of the components according to the analyzed and determined overall splicing scheme for the underwater environment and the overall splicing scheme for the environment on shore.

It is further considered that the overall splicing schemes implemented become different when the splicing environment is an underwater environment, which would be described in detail as follows:

The overall splicing scheme for the underwater environment is as follows:
Step S521, analyzing whether an underwater depth reaches a preset depth. If no, executing step S542; if yes, executing step S546.
Step S522, sinking the components to a preset underwater position.
Step S523, locating components to be docked in close proximity by a 3D vertical measuring rope system, and conducting a second precise positioning by a visualized underwater robot.
Step S524, monitoring a posture and deformation of the components in water in real time.
Step S525, maintaining the posture and deformation of the components to be docked in water, and performing a precise docking toward a precisely positioned position according to a preset posture and deformation.
Step S526, based on a distributed multi-antenna Beidou navigation + inertial navigation and tightly coupled system on water surface with long-duration, reliable positioning and orientation technology, breaking through an effect of multipath interference of satellite's signals under complex sea conditions, adopting an online calibration method of the multi-sensor integrated positioning and orientation system, to realize a precise self-calibration of a long-distance distributed positioning system.
Step S527, measuring and obtaining a 3D position, gesture and speed of an underwater immersed tube and its ship in the whole process of floating transportation and installation in real time, to support a precise control of a motion state of the floating ship, and to realize a safe floating transportation and installation.

It is further considered that the specific overall splicing scheme executed becomes different when the splicing environment is an environment on shore, which would be described in detail as follows.

The overall assembly scheme of the environment on shore is as follows:
Step S531, analyzing, whether the environment is an environment with high humidity and high salinity. If yes, executing step S532.
Step S532, adopting a measurement camera array with high-precision to provide an anti-interference infrared target matrix, to realize millimeter-sized deformation monitoring of the floating ship and the immersed tube.
Step S533, accurately measuring 3D Models of the floating ship and the immersed tube by a high-precision line structured light.
Step S534, accurately identifying the weak deformation signal under a strong background noise, realizing a real-time reconstruction of a high-precision deformation field of the floating carrier and the super-large immersed tube.
Step S535, constructing an array of integrated Beidou navigation, INS and underwater high-definition cameras, and sinking and docking by away of a hierarchical positioning method.
Step S536, realizing a precise positioning and orientation in real time of super-large underwater immersed tubes by way of a new method for 3D horizontal/vertical measurement and orientation maintenance in a moving environment in combination with Beidou navigation and high-precision inertial navigation.
Step S537, guiding the super-large immersed tubes to move to an area to be installed. The underwater robot is used to obtain the relative spatial relationship between the end for docking of the immersed tube and the end for docking of the installed immersed tube through the measurement method of the mechanical arm. A centimeter-sized precise docking of super-large underwater immersed tubes is realized by a close-up precision measurement camera array under complex dynamic sea conditions and a multi-level light source adjustment in a dynamic environment with low light.
Step S538, obtaining a real-time gesture information with high precision of the surface working platform and underwater immersed tube based on the fusion processing of Beidou navigation satellite positioning data, inertial sensor data, high-definition images, underwater acoustic wave positioning data, and dynamic measurement data of laser radar.
Step S539, constructing a gesture control mechanism of a sunken ship based on the real-time gesture information with high precision, to support a gesture control decision of the sunken ship on water surface.

It is further considered in step S600 of FIG. 1 that the splicing process must be further supervised during executing the overall splicing scheme of the components, which is described in detail with reference to the following embodiments.

A construction management method for resilient tunnel structure also includes steps parallel with a step of executing the overall splicing scheme of the components, specifically as follows:
Step Sa00, obtaining a 3D point cloud of a spliced prefabricated tunnel components/structures by automatically scanning prefabricated tunnel components/structures that have been spliced and will be spliced by a 3D full-section scanner, and preliminarily handling, for example, denoising etc. an initial 3D point cloud by scanner supporting software.
Step Sb00, screening and analyzing a point cloud data, eliminating non-critical information, extracting edge of the pipe segments by way of vector summation, solving actual 3D coordinates for splicing prefabricated tunnel components/structures, and analyzing a gap & flush between the pipe segments that are spliced and will be spliced, to judge whether the required accuracy is achieved.
Step Sc00, taking images of all the pipe segments in the measurement area through a camera, extracting feature points from the images, solving 3D coordinates of the feature points through feature point matching and beam adjustment, and constructing 3D geometric models of all the pipe segments to be measured in the measurement area.
Step Sd00, establishing a requirement model of pipe segment splicing parameter, extracting pipe segment splicing parameters and displacement parameters of rubber gasket according to the measurement of the 3D geometric model, and analyzing splicing error information.
Step Se00, summarizing information whether the required accuracy is achieved and splicing error information as a prompt information, and transmitting it to a feedback prompt system.

Based on the same inventive concept, an embodiment of the present disclosure provides a construction management system for resilient tunnel structure, including a memory and a processor, a program that can run a program on the processor which can implement any one of the methods shown in FIGS. 1 to 9.

The embodiments are the preferred embodiments of the present application, which are not intended to limit the protection scope of the present application.

## Claims

1. A construction management method for resilient tunnel structure, comprising:
obtaining production parameter information of components at different positions of a preset tunnel structure, the production parameter information comprises material information and structure information applied to the components;
analyzing and determining a production management scheme of the components according to a correspondence between the production parameter information and the production management scheme of the components at different positions of the preset tunnel structure, the production management scheme is to schedule production of the components according to digital twin models corresponding to the components at different planed production stages and periods;
executing the production management scheme of the components;
forming the components at different positions of the tunnel structure in reality;
**characterized in that** the construction management method for resilient tunnel structure further comprises:
analyzing and determining an overall splicing scheme of the components according to a splicing environment of preset components at different positions, splicing object components of the components at different positions, and a correspondence between the preset components at different positions and splicing schemes in different environments;
executing the overall splicing scheme of the components;
forming the tunnel structure in reality;
a step of obtaining production parameter information of the components at different positions of a preset tunnel structure comprises:
obtaining environment information applied to the tunnel structure;
analyzing and determining a preliminary production structure of the components at different positions of the tunnel structure in reality by querying a preset database that stores a correspondence between the environment information applied to the tunnel structure and the preliminary production structure of the components at different positions of the tunnel structure;
obtaining test results of steel fiber reinforced concrete members with different steel fiber contents and reinforcement ratios after all performance tests in reality, the performance tests comprise:
- conducting an optimized design for a mix ratio of the steel fiber concrete;
- conducting a component performance comparison through a mechanical property test on the steel fiber concrete with little reinforcement and no reinforcement, as well as slab and beam components, and comparison of a result thereof with ordinary reinforced concrete components;
- conducting an impact resilience test Research;
- determining mechanical properties of pipe segments under a drawing force and bending moment through a drawing test and bending test on the pipe segments, to judge a safety and reliability of the pipe segments hoisting process;
- conducting a drawing test on the pipe segments for a demoulding maintenance stage in a production process of the pipe segments, monitoring a drawing force and loading displacement test data, to obtain the maximal drawing force of a pre-buried hoisting hole of the pipe segments; conducting a bending test on the pipe segments for lifting and handling during storage and transportation of the pipe segments, monitoring a surface stress, strain, mid-span deflection, rebar strain, and cracks of the steel fiber reinforced concrete during the bending test, to judge mechanical properties of the pipe segments under bending moment;
- judging and determining an optimized joint type of the pipe segments through a loading test on the joint;
analyzing and determining an integrative test score for the production of different materials according to a correspondence between the test results and test scores, a correspondence between environment information applied to preset different tunnel structures and weights of different performance tests, and test scores of the production structure of different materials after all performance tests;
selecting a material with the highest comprehensive test score as a material applied to the production structure;
forming the production parameter information according to the material applied to the production structure and the preliminary production structure;
analyzing and determining a calibration scheme according to a correspondence between the production parameter information formed and the calibration scheme;
executing the calibration scheme of the production parameter information;
obtaining the production parameter information of the components at different positions of the tunnel structure after executing the calibration scheme of the production parameter information.

2. The construction management method for resilient tunnel structure according to claim 1, further comprising steps after a step of obtaining production parameter information of the components at different positions of the tunnel structure after executing the calibration scheme of the production parameter information, as follows:
analyzing and determining an arrangement scheme of a relevant detection device according to a correspondence between the production parameter information of the components and the arrangement scheme of the relevant detection device;
executing the arrangement scheme of the relevant detection device;
constructing complete arrangement information of all the components according to the arrangement scheme of the relevant detection device, and the production parameter information of the components at different positions of the tunnel structure after executing the calibration scheme of the production parameter information.

3. The construction management method for resilient tunnel structure according to claim 2, further comprising steps after a step of constructing complete arrangement information of all the components, comprising:
analyzing and obtaining an accuracy level of the complete arrangement information of the components;
developing an automatic generation plan of component parameterization model according to the accuracy level of the complete arrangement information of the components and an automatic generation plan of parameterization model.

4. The construction management method for resilient tunnel structure according to claim 1, wherein a step of analyzing and determining a production management scheme of the components according to a correspondence between the production parameter information and the production management scheme of the components at different positions of the preset tunnel structure:
acquiring 3D scene information applied to a current tunnel structure;
querying a tunnel structure applied to a corresponding 3D scene information history;
analyzing and determining the production management scheme of the components according to the correspondence between the production parameter information and the production management scheme of the components at different positions of the preset tunnel structure, if the tunnel structure queried and applied is consistent with the current tunnel structure;
if the tunnel structure queried and applied is not consistent with the current tunnel structure, analyzing and obtaining same positions and different positions of the two tunnel structures, marking the same and different positions of the two tunnel structures as a notification message, and sending the notification message to a terminal held by person in charge;
if nothing is found, analyzing and obtaining a historical 3D scene information with the most parts identical to the 3D scene information applied to the current tunnel structure as reference 3D scene information, and obtaining remaining differences of the 3D scene information applied to the current tunnel structure;
searching for historical 3D scene information with same 3D scene information as the remaining differences from remaining 3D scene information applied to the historical tunnel structure according to the remaining differences of the 3D scene information applied to the current tunnel structure, and obtaining a tunnel structure corresponding to respective remaining differences in the historical 3D scene information;
analyzing and determining the production management scheme of the components according to the tunnel structure corresponding to respective remaining differences in the historical 3D scene information, a tunnel structure corresponding to a same part of the 3D scene information applied to the current tunnel structure contained in the reference 3D scene information, and the correspondence between the production parameter information and the production management scheme of the components at different positions of the preset tunnel structure.

5. The construction management method for resilient tunnel structure according to claim 4, wherein a step of analyzing and obtaining same positions and different positions of the two tunnel structures, marking the same and different positions of the two tunnel structures as a notification message, and sending the notification message to a terminal held by person in charge comprises:
obtaining the different positions of the two tunnel structures;
analyzing and obtaining component combinations at the different positions;
analyzing and determining an overall use safety and reliability of the component combinations according to a correspondence between the component combinations and the overall use safety reliability;
loading the notification message with the same positions and the different positions as an annotation, while loading the notification message with a component combination with higher overall use safety and reliability as a recommended message, and sending the annotation and the recommended message to the terminal held by person in charge.

6. The construction management method for resilient tunnel structure according to claim 5, wherein a step of analyzing and determining an overall use safety and reliability of the component combinations according to a correspondence between the component combinations and the overall use safety reliability comprises:
obtaining a distribution probability of natural disasters in an area of the 3D scene information where the tunnel structure is located;
analyzing and determining an overall use safety and reliability of the component combinations under different types of natural disasters according to a correspondence between natural disaster types, component combinations and the overall use safety and reliability;
analyzing and determining the effective overall use safety and reliability of the component combination as a current overall safety and reliability of the component combinations according to the distribution probability of natural disaster in the area of the 3D scene information where the tunnel structure is located and the overall use safety and reliability of the component combinations under different types of natural disasters.

7. The construction management method for resilient tunnel structure according to claim 6, further comprising steps after a step of obtaining a tunnel structure corresponding to respective remaining differences in the historical 3D scene information and before a step of analyzing and determining the production management scheme of the components, comprising:
analyzing, whether the tunnel structure corresponding to the respective remaining differences in the historical 3D scene information is obtained;
if yes, executing subsequent steps;
if no, querying a historical 3D scene information containing most same 3D scene information as the retaining differences;
searching for a historical 3D scene information containing same 3D scene information as the remaining differences;
if not found, then jumping to a step of querying a historical 3D scene information containing most same 3D scene information as the retaining differences, until the historical 3D scene information is queried or the tunnel structure corresponding to the remaining differences in the historical 3D scene information is obtained;
if nothing is found after querying the historical 3D scene information, sending the remaining differences as a notification message to the terminal held by person in charge.

8. The construction management method for resilient tunnel structure according to any one of claims 1 to 7, further comprising steps parallel with a step of executing the production management scheme of the components, as follows:
obtaining a stage of the production management scheme of the components being executed, the stage of the production scheme comprises a production stage and a transportation stage;
starting a detection device for component production parameter prearranged on the components for detecting material information and structure information of the components, and obtaining component production parameter information in real time, if the production management scheme of the components being executed is in the production stage;
comparing the production parameter information and a time node of the component obtained in real time with preset production parameter information and a preset time node,
if a comparison result is consistent, maintaining the production scheme being executed unchanged;
if the comparison result is inconsistent, retracing, whether the production parameter information of the components obtained in real time is preset historical production parameter information,
if yes, judging, if an actual production speed of the components is lower than a preset standard or exceeds the preset standard;
if no, judging, there is a problem in a production of the components, and sending a notification message to the terminal held by person in charge in time;
if the production management scheme of the components being executed is in the transportation stage, tracking a position and a time node of the components in real time, analyzing and determining, whether the components have been transported to a preset position within a preset time period,
If yes, judging that the transportation of the components is completed,
if no, retracing a position where a position deviation of the components occurs, and sending the position to the terminal held by person in charge.

9. A construction management system for resilient tunnel structure, comprising a memory, a processor, and a program stored in the memory and being operable on the processor, the program can realize the construction management method for resilient tunnel structure according to any one of claims 1 to 8 when being loaded and implemented by the processor.

## Patentansprüche

1. Baumanagementverfahren für ein elastisches bzw. belastbares Tunnelbauwerk bzw. - struktur, umfassend:
Gewinnen von Produktionsparameterinformationen von Bauteilen an verschiedenen Positionen eines vorgegebenen Tunnelbauwerks, wobei die Produktionsparameter-informationen Materialinformationen und auf die Bauteile aufgebrachte Strukturinformationen umfassen;
Analysieren und Bestimmen eines Produktionsmanagementschemas der Komponenten gemäß einer Übereinstimmung zwischen den Produktionsparameterinformationen und dem Produktionsmanagementschema der Komponenten an verschiedenen Positionen des voreingestellten Tunnelbauwerks, wobei das Produktionsmanagementschema dazu dient, die Produktion der Komponenten gemäß digitalen Zwillingsmodellen zu planen, die den Komponenten in verschiedenen geplanten Produktionsstufen und -perioden entsprechen;
Ausführen des Produktionsmanagementschemas der Komponenten;
Ausbilden der Bauteile an verschiedenen Stellen des Tunnelbauwerks in der Realität;
**dadurch gekennzeichnet, dass** das Baumanagementverfahren für ein elastisches Tunnelbauwerk weiterhin umfasst:
Analysieren und Bestimmen eines Gesamtspleißschemas der Komponenten gemäß einer Spleißumgebung von voreingestellten Komponenten an verschiedenen Positionen, Spleißen von Objektkomponenten der Komponenten an verschiedenen Positionen und eine Entsprechung zwischen den voreingestellten Komponenten an verschiedenen Positionen und Spleißschemata in verschiedenen Umgebungen;
Ausführen des gesamten Spleißschemas der Komponenten;
Ausbilden des Tunnelbauwerks in der Realität;
Wobei ein Schritt zur Gewinnung von Produktionsparameterinformationen der Komponenten an verschiedenen Positionen eines vorgegebenen Tunnelbauwerks Folgendes umfasst:
Erhalten von Umgebungsinformationen, die auf das Tunnelbauwerk angewendet werden;
Analysieren und Bestimmen einer vorläufigen Produktionsstruktur der Komponenten an verschiedenen Positionen des Tunnelbauwerks in der Realität durch Abfragen einer voreingestellten Datenbank, die eine Übereinstimmung zwischen den auf das Tunnelbauwerk angewandten Umgebungsinformationen und der vorläufigen Produktionsstruktur der Komponenten an verschiedenen Positionen des Tunnelbauwerks speichert;
Gewinnen von Prüfergebnissen von stahlfaserverstärkten Betonbauteilen mit unterschiedlichen Stahlfasergehalten und Bewehrungsverhältnissen nach allen Leistungsprüfungen in der Realität, wobei die Leistungsprüfungen Folgendes umfassen:
- Durchführen eines optimierten Entwurfs für das Mischungsverhältnis des Stahlfaserbetons;
- Durchführen eines Leistungsvergleichs der Bauteile durch Prüfung der mechanischen Eigenschaften von Stahlfaserbeton mit geringer und ohne Bewehrung sowie von Platten- und Balkenbauteilen und Vergleich der Ergebnisse mit denen von herkömmlichen Stahlbetonbauteilen;
- Durchführen einer Bastizitätsprüfungs-Forschung;
- Bestimmen der mechanischen Eigenschaften der Rohrsegmente unter der Ziehkraft und dem Biegemoment durch den Ziehversuch und den Biegetest an den Rohrsegmenten, um die Sicherheit und Zuverlässigkeit des Hebeprozesses der Rohrsegmente zu beurteilen;
- Durchführen eines Ziehversuchs an den Rohrsegmenten für eine Entformungswartungsstufe in einem Produktionsprozess der Rohrsegmente, Überwachen einer Ziehkraft und von Belastungsverschiebungs-Testdaten, um die maximale Ziehkraft eines vorgebohrten Hublochs der Rohrsegmente zu erhalten; Durchführen eines Biegetests an den Rohrsegmenten, Überwachen einer Oberflächenspannung, einer Dehnung, einer Durchbiegung in der Mitte der Spannweite, einer Bewehrungsdehnung und von Rissen des stahlfaserverstärkten Betons während des Biegetests, um die mechanischen Eigenschaften der Rohrsegmente unter Biegemoment zu beurteilen;
- Beurteilen und Bestimmen des optimalen Verbindungstyps der Rohrsegmente durch einen Belastungstest an der Verbindung;
Analysieren und Bestimmen einer integrativen Testbewertung für die Produktion verschiedener Materialien gemäß einer Übereinstimmung zwischen den Testergebnissen und Testbewertungen, einer Übereinstimmung zwischen Umgebungsinformationen, die für die Vorgabe verschiedener Tunnelbauwerke und Gewichte verschiedener Leistungstests angewendet werden, und Testbewertungen der Produktionsstruktur verschiedener Materialien nach allen Leistungstests;
Auswählen des Materials mit der höchsten Gesamtpunktzahl als Material für die Produktionsstruktur;
Ausbilden der Produktionsparameter-Informationen entsprechend dem für die Produktionsstruktur verwendeten Material und der vorläufigen Produktionsstruktur;
Analysieren und Bestimmen eines Kalibrierungsschemas entsprechend einer Übereinstimmung zwischen den gebildeten Produktionsparameterinformationen und dem Kalibrierungsschema;
Ausführen des Kalibrierungsschemas der Produktionsparameterinformationen;
Gewinnen der Produktionsparameterinformationen der Komponenten an verschiedenen Positionen des Tunnelbauwerks nach Ausführung des Kalibrierungsschemas der Produktionsparameter- informationen.

2. Baumanagementverfahren für ein elastisches Tunnelbauwerk nach Anspruch 1, das nach einem Schritt der Gewinnung von Produktionsparameterinformationen der Komponenten an verschiedenen Positionen des Tunnelbauwerks nach Ausführung des Kalibrierungsschemas der Produktionsparameterinformationen folgende Schritte umfasst:
Analysieren und Bestimmen eines Anordnungsschemas einer relevanten Erfassungsvorrichtung gemäß einer Übereinstimmung zwischen den Produktionsparameterinformationen der Komponenten und dem Anordnungsschema der relevanten Erfassungsvorrichtung ;
Ausführen des Anordnungsschemas der betreffenden Erkennungsvorrichtung ;
Erstellen vollständiger Anordnungsinformationen aller Komponenten gemäß dem Anordnungs-schema der betreffenden Erfassungsvorrichtung und der Produktionsparameterinformationen der Komponenten an verschiedenen Positionen des Tunnelbauwerks nach Ausführung des Kalibrierungsschemas der Produktionsparameterinformationen.

3. Baumanagementverfahren für ein elastisches Tunnelbauwerk nach Anspruch 2, das nach einem Schritt zur Erstellung vollständiger Anordnungsinformationen aller Komponenten weitere Schritte umfasst, die Folgendes umfassen:
Analysieren und Ermitteln des Genauigkeitsgrads der vollständigen Anordnungsinformationen der Komponenten;
Entwickeln eines automatischen Generierungsplans für ein Komponentenparametrierungsmodell entsprechend dem Genauigkeitsgrad der vollständigen Anordnungsinformationen der Komponenten und eines automatischen Generierungsplans für ein Parametrierungsmodell.

4. Baumanagementverfahren für ein elastisches Tunnelbauwerk nach Anspruch 1, wobei ein Schritt des Analysierens und Bestimmens eines Produktionsmanagementschemas der Komponenten gemäß einer Übereinstimmung zwischen den Produktionsparameterinformationen und dem Produktionsmanagementschema der Komponenten an verschiedenen Positionen des vorgegebenen Tunnelbauwerks erfolgt:
Erfassen von 3D-Szeneninformationen, die auf ein aktuelles Tunnelbauwerk angewendet werden;
Abfragen eines Tunnelbauwerks, das auf eine entsprechende 3D-Szeneninformationshistorie angewendet wird;
Analysieren und Bestimmen des Produktionsmanagementschemas der Komponenten entsprechend der Übereinstimmung zwischen den Produktionsparameterinformationen und dem Produktionsmanagementschema der Komponenten an verschiedenen Positionen des voreingestellten Tunnelbauwerks, wenn das abgefragte und angewandte Tunnelbauwerk mit dem aktuellen Tunnelbauwerk konsistent ist;
wenn das abgefragte und angewandte Tunnelbauwerk nicht mit dem aktuellen Tunnelbauwerk übereinstimmt, Analysieren und Ermitteln von gleichen und unterschiedlichen Positionen der beiden Tunnelbauwerke, Markieren der gleichen und unterschiedlichen Positionen der beiden Tunnelbauwerke als eine Benachrichtigungsmeldung und Senden der Benachrichtigungsmeldung an ein Endgerät einer verantwortlichen Person;
wenn nichts gefunden wird, Analysieren und Erhalten einer historischen 3D-Szeneninformation mit den meisten Teilen, die mit der 3D-Szeneninformation identisch sind, die auf das aktuelle Tunnelbauwerk angewendet wird, als Referenz-3D-Szeneninformation, und Erhalten der verbleibenden Unterschiede der 3D-Szeneninformation, die auf das aktuelle Tunnelbauwerk angewendet wird;
Suchen nach historischen 3D-Szeneninformationen mit denselben 3D-Szeneninformationen wie die verbleibenden Unterschiede aus den verbleibenden 3D-Szeneninformationen, die auf das historische Tunnelbauwerk angewendet werden, entsprechend den verbleibenden Unterschieden der 3D-Szeneninformationen, die auf das aktuelle Tunnelbauwerk angewendet werden, und Erhalten eines Tunnelbauwerks, das den jeweiligen verbleibenden Unterschieden in den historischen 3D-Szeneninformationen entspricht;
Analysieren und Bestimmen des Produktionsmanagementschemas der Komponenten gemäß des Tunnelbauwerks, das den jeweiligen verbleibenden Unterschieden in den historischen 3D-Szeneninformationen entspricht, eines Tunnelbauwerks, das einem gleichen Teil der 3D-Szeneninformationen entspricht, der auf das aktuelle Tunnelbauwerk angewendet wird, die in den Referenz-3D-Szeneninformationen enthalten ist, und der Übereinstimmung zwischen den Produktionsparameterinformationen und dem Produktionsmanagementschema der Komponenten an verschiedenen Positionen der vorgegebenen Tunnelbauwerk.

5. Baumanagementverfahren für ein elastisches Tunnelbauwerk nach Anspruch 4, wobei ein Schritt des Analysierens und Erhaltens gleicher Positionen und unterschiedlicher Positionen der beiden Tunnelbauwerke, des Markierens der gleichen und unterschiedlichen Positionen der beiden Tunnelbauwerke als eine Benachrichtigungsnachricht und des Sendens der Benachrichtigungs-nachricht an ein von einer verantwortlichen Person gehaltenes Terminal Folgendes umfasst:
Gewinnen der unterschiedlichen Positionen der beiden Tunnelbauwerke;
Analyse und Ermittlung von Bauteilkombinationen an den verschiedenen Positionen;
Analysieren und Bestimmen einer Gesamtgebrauchssicherheit und -zuverlässigkeit der Komponentenkombinationen entsprechend einer Übereinstimmung zwischen den Komponentenkombinationen und der Gesamtgebrauchssicherheitszuverlässigkeit;
Laden der Benachrichtigungsnachricht mit den gleichen Positionen und den unterschiedlichen Positionen als Anmerkung, während die Benachrichtigungsnachricht mit einer Komponentenkombination mit höherer Gesamtgebrauchssicherheit und Zuverlässigkeit als empfohlene Nachricht geladen wird, und Senden der Anmerkung und der empfohlenen Nachricht an das Terminal, das sich im Besitz der verantwortlichen Person befindet.

6. Baumanagementverfahren für ein elastisches Tunnelbauwerk nach Anspruch 5, wobei ein Schritt des Analysierens und Bestimmens einer Gesamtnutzungssicherheit und - zuverlässigkeit der Bauteilkombinationen gemäß einer Übereinstimmung zwischen den Bauteilkombinationen und der Gesamtnutzungssicherheitszuverlässigkeit Folgendes umfasst:
Gewinnen bzw. Ermitteln einer Verteilungswahrscheinlichkeit von Naturkatastrophen in einem Bereich der 3D-Szeneninformation, in dem sich das Tunnelbauwerk befindet;
Analysieren und Bestimmen einer Gesamtgebrauchssicherheit und -zuverlässigkeit der Komponentenkombinationen unter verschiedenen Arten von Naturkatastrophen entsprechend einer Korrespondenz zwischen Naturkatastrophentypen, Komponentenkombinationen und der Gesamtgebrauchssicherheit und -zuverlässigkeit;
Analysieren und Bestimmen der effektiven Gesamtnutzungssicherheit und -zuverlässigkeit der Komponentenkombination als aktuelle Gesamtnutzungssicherheit und -zuverlässigkeit der Komponentenkombinationen gemäß der Verteilungswahrscheinlichkeit von Naturkatastrophen im Bereich der 3D-Szeneninformationen, in dem sich das Tunnelbauwerk befindet, und der Gesamtnutzungssicherheit und -zuverlässigkeit der Komponentenkombinationen unter verschiedenen Arten von Naturkatastrophen.

7. Baumanagementverfahren für ein elastisches Tunnelbauwerk nach Anspruch 6, das ferner Schritte nach einem Schritt des Erhaltens eines Tunnelbauwerks, das den jeweiligen verbleibenden Unterschieden in den historischen 3D-Szeneninformationen entspricht, und vor einem Schritt des Analysierens und Bestimmens des Produktionsmanagementschemas der Komponenten umfasst, die Folgendes umfassen:
Analysieren, ob die Tunnelbauwerk, die den jeweiligen verbleibenden Unterschieden in den historischen 3D-Szeneninformationen entspricht, erhalten wird;
wenn ja, Ausführen der nachfolgenden Schritte;
wenn nein, Abfrage einer historischen 3D-Szeneninformation, die die meisten gleichen 3D-Szeneninformationen enthält wie die beibehaltenen Unterschiede;
Suche nach einer historischen 3D-Szeneninformation, die dieselbe 3D-Szeneninformation enthält wie die übrigen Unterschiede;
wenn nicht gefunden, dann Springen zu einem Schritt der Abfrage einer historischen 3D-Szeneninformation, die die meisten gleichen 3D-Szeneninformationen wie die beibehaltenen Unterschiede enthält, bis die historische 3D-Szeneninformation abgefragt oder das Tunnelbauwerk, das den verbleibenden Unterschieden in der historischen 3D-Szeneninformation entspricht, erhalten wird;
wenn nach der Abfrage der historischen 3D-Szeneninformationen nichts gefunden wird, Senden der verbleibenden Differenzen als Benachrichtigungsmeldung an das Endgerät der zuständigen Person.

8. Baumanagementverfahren für ein elastisches Tunnelbauwerk nach einem der Ansprüche 1 bis 7, das ferner die folgenden Schritte parallel zu einem Schritt der Ausführung des Produktionsmanagementschemas der Komponenten umfasst
Erhalten einer Stufe des Produktionsmanagementschemas der Komponenten, die ausgeführt werden, wobei die Stufe des Produktionsschemas eine Produktionsstufe und eine Transportstufe umfasst;
Starten einer Erfassungsvorrichtung für Komponentenproduktionsparameter, die an den Komponenten angeordnet ist, um Materialinformationen und Strukturinformationen der Komponenten zu erfassen, und Erhalten von Komponentenproduktionsparameterinformationen in Echtzeit, wenn sich das Produktionsmanagementschema der ausgeführten Komponenten in der Produktionsphase befindet;
Vergleich der in Echtzeit erhaltenen Produktionsparameterinformationen und eines Zeitknotens der Komponente mit voreingestellten Produktionsparameterinformationen und einem voreingestellten Zeitknoten,
wenn ein Vergleichsergebnis konsistent ist, unverändert Bleiben des ausgeführten Produktionsschemas;
wenn das Vergleichsergebnis inkonsistent ist, Rückverfolgen, ob die in Echtzeit erhaltenen Produktionsparameterinformationen der Komponenten voreingestellte historische Produktionsparameterinformationen sind,
wenn ja, Beurteilen, ob die tatsächliche Produktionsgeschwindigkeit der Bauteile unter einem vorgegebenen Standard liegt oder den vorgegebenen Standard überschreitet;
wenn nein, Beurteilen, dass es ein Problem bei der Produktion der Komponenten gibt, und rechtzeitiges Senden einer Benachrichtigung an das Terminal der zuständigen Person;
wenn sich das Produktionsmanagementschema der Komponenten, die ausgeführt werden, in der Transportphase befindet, Verfolgen einer Position und eines Zeitknotens der Komponenten in Echtzeit, Analysieren und Bestimmen, ob die Komponenten innerhalb einer vorgegebenen Zeitspanne zu einer vorgegebenen Position transportiert worden sind,
wenn ja, Beurteilen dass der Transport der Komponenten abgeschlossen ist,
wenn nein, Rückverfolgen einer Position, bei der eine Positionsabweichung der Komponenten auftritt, und Übermitteln der Position an das Terminal der verantwortlichen Person.

9. Baumanagementsystem für ein elastisches Tunnelbauwerk, umfassend einen Speicher, einen Prozessor und ein Programm, das in dem Speicher gespeichert ist und auf dem Prozessor betrieben werden kann, wobei das Programm das Baumanagementverfahren für ein elastisches Tunnelbauwerk nach einem der Ansprüche 1 bis 8 realisieren kann, wenn es von dem Prozessor geladen und implementiert wird.

## Revendications

1. Procédé de gestion de construction pour un ouvrage de tunnel résilient, comprenant :
l'obtention d'informations sur des paramètres de production des composants à différentes positions d'un ouvrage de tunnel prédéfini, les informations sur les paramètres de production comprenant des informations sur les matériaux et des informations de structure appliquées aux composants ;
l'analyse et la détermination d'un schéma de gestion de production des composants en fonction d'une correspondance entre les informations sur les paramètres de production et le schéma de gestion de production des composants à différentes positions de l'ouvrage de tunnel prédéfini, le schéma de gestion de production consistant à planifier la production des composants en fonction de modèles numériques jumeaux correspondant aux composants à différentes étapes et périodes de production planifiées ;
l'exécution du schéma de gestion de production des composants ;
la formation des composants à différentes positions de l'ouvrage de tunnel dans la réalité ;
**caractérisé en ce que** le procédé de gestion de construction pour un ouvrage de tunnel résilient comprend en outre :
l'analyse et la détermination d'un schéma global d'assemblage des composants en fonction d'un environnement d'assemblage des composants prédéfinis à différentes positions, de parties objet de l'assemblage des composants à différentes positions, et d'une correspondance entre les composants prédéfinis à différentes positions et des schémas d'assemblage dans différents environnements ;
l'exécution du schéma global d'assemblage des composants ;
la formation de l'ouvrage de tunnel dans la réalité ;
une étape d'obtention d'informations sur les paramètres de production des composants à différentes positions d'un ouvrage de tunnel prédéfini comprend :
l'obtention d'informations sur l'environnement appliqué à l'ouvrage de tunnel ;
l'analyse et la détermination d'une structure de production préliminaire des composants à différentes positions de l'ouvrage de tunnel dans la réalité par interrogation d'une base de données prédéfinie stockant une correspondance entre les informations sur l'environnement appliquées à l'ouvrage de tunnel et la structure de production préliminaire des composants à différentes positions de l'ouvrage de tunnel ;
l'obtention de résultats de tests de membres en béton renforcé de fibres d'acier avec différentes teneurs en fibres d'acier et différents taux d'armature après tous les tests de performance dans la réalité, les tests de performance comprenant :
• la réalisation d'une conception optimisée pour un rapport de mélange du béton armé aux fibres d'acier ;
• la réalisation d'une comparaison de performance des composants par un test des propriétés mécaniques sur le béton armé aux fibres d'acier avec peu d'armature et sans armature, ainsi que sur des composants de dalle et de poutre, et la comparaison d'un résultat avec des composants en béton armé ordinaire ;
• la réalisation d'une recherche de test de résistance aux chocs ;
• la détermination de propriétés mécaniques de segments de tuyaux sous une force de traction et un moment de flexion au moyen d'un test de traction et d'un test de flexion sur les segments de tuyaux, pour évaluer la sécurité et de la fiabilité du processus de levage des segments de tuyaux ;
• la réalisation d'un test de traction sur les segments de tuyaux pour une étape de maintenance de démoulage dans un processus de production des segments de tuyaux, la surveillance des données de test de force de traction et de déplacement de charge, afin d'obtenir la force de traction maximale d'un trou de levage préincrusté des segments de tuyaux ;
• la réalisation d'un test de flexion sur les segments de tuyaux pour le levage et la manipulation pendant le stockage et le transport des segments de tuyaux, la surveillance de la contrainte de surface, la déformation, la flèche à mi-portée, la déformation des armatures, et les fissures du béton armé aux fibres d'acier pendant le test de flexion, pour évaluer les propriétés mécaniques des segments de tuyaux soumis à un moment de flexion ;
• l'évaluation et la détermination d'un type de joint optimisé des segments de tuyaux au moyen d'un test de charge sur le joint ;
l'analyse et la détermination d'un score de test intégratif pour la production de différents matériaux en fonction d'une correspondance entre les résultats de test et les scores de test, d'une correspondance entre des informations sur l'environnement appliquées à différents ouvrages de tunnel prédéfinis et les pondérations des différents tests de performance, et des scores de test de la structure de production des différents matériaux après tous les tests de performance ;
la sélection d'un matériau ayant le score de test global le plus élevé comme matériau appliqué à la structure de production ;
la formation des informations sur les paramètres de production en fonction du matériau appliqué à la structure de production et de la structure de production préliminaire ;
l'analyse et la détermination d'un schéma d'étalonnage en fonction d'une correspondance entre les informations sur les paramètres de production formées et le schéma d'étalonnage ;
l'exécution du schéma d'étalonnage des informations sur les paramètres de production ;
l'obtention des informations sur les paramètres de production des composants à différentes positions de l'ouvrage de tunnel après l'exécution du schéma d'étalonnage des informations sur les paramètres de production.

2. Procédé de gestion de construction pour un ouvrage de tunnel résilient selon la revendication 1, comprenant en outre, après l'étape d'obtention d'informations sur les paramètres de production des composants à différentes positions de l'ouvrage de tunnel après l'exécution du schéma d'étalonnage des informations sur les paramètres de production, les étapes suivantes :
l'analyse et la détermination d'un schéma de disposition d'un dispositif de détection pertinent en fonction d'une correspondance entre les informations sur les paramètres de production des composants et le schéma de disposition du dispositif de détection pertinent ;
l'exécution du schéma de disposition du dispositif de détection pertinent ;
la construction d'informations de disposition complètes de tous les composants en fonction du schéma de disposition du dispositif de détection pertinent, et des informations sur les paramètres de production des composants à différentes positions de l'ouvrage de tunnel après exécution du schéma d'étalonnage des informations sur les paramètres de production.

3. Procédé de gestion de construction pour un ouvrage de tunnel résilient selon la revendication 2, comprenant en outre, après l'étape de construction d'informations de disposition complètes de tous les composants, les étapes suivantes :
l'analyse et l'obtention d'un niveau de précision des informations de disposition complètes des composants ;
le développement d'un plan de génération automatique d'un modèle de paramétrage des composants en fonction du niveau de précision des informations de disposition complètes des composants et d'un plan de génération automatique de modèle de paramétrage.

4. Procédé de gestion de construction pour un ouvrage de tunnel résilient selon la revendication 1, dans lequel une étape d'analyse et de détermination d'un schéma de gestion de production des composants en fonction d'une correspondance entre les informations sur les paramètres de production et le schéma de gestion de production des composants à différentes positions de l'ouvrage de tunnel prédéfini comprend :
l'acquisition d'informations de scène 3D appliquées à un ouvrage de tunnel actuel ;
l'interrogation d'un ouvrage de tunnel appliqué à un historique d'informations de scène 3D correspondantes ;
l'analyse et la détermination du schéma de gestion de production des composants en fonction de la correspondance entre les informations sur les paramètres de production et le schéma de gestion de production des composants à différentes positions de l'ouvrage de tunnel prédéfini, si l'ouvrage de tunnel interrogé et appliqué est cohérent avec l'ouvrage de tunnel actuel ;
si l'ouvrage de tunnel interrogé et appliqué n'est pas cohérent avec l'ouvrage de tunnel actuel, l'analyse et l'obtention de positions identiques et de positions différentes des deux ouvrages de tunnel, le marquage des positions identiques et différentes des deux ouvrages de tunnel comme message de notification, et l'envoi du message de notification à un terminal détenu par la personne responsable ;
si rien n'est trouvé, l'analyse et l'obtention d'informations de scène 3D historiques ayant le plus de parties identiques aux informations de scène 3D appliquées à l'ouvrage de tunnel actuel comme informations de scène 3D de référence, et l'obtention des différences restantes des informations de scène 3D appliquées à l'ouvrage de tunnel actuel ;
la recherche d'informations de scène 3D historiques présentant les mêmes informations de scène 3D que les différences restantes des informations de scène 3D restantes appliquées à l'ouvrage de tunnel historique en fonction des différences restantes des informations de scène 3D appliquées à l'ouvrage de tunnel actuel, et l'obtention d'un ouvrage de tunnel correspondant aux différences restantes respectives dans les informations de scène 3D historiques ;
l'analyse et la détermination du schéma de gestion de production des composants en fonction de l'ouvrage de tunnel correspondant aux différences restantes respectives dans les informations de scène 3D historiques, d'un ouvrage de tunnel correspondant à une même partie des informations de scène 3D appliquées à l'ouvrage de tunnel actuel contenu dans les informations de scène 3D de référence, et de la correspondance entre les informations sur les paramètres de production et le schéma de gestion de production des composants à différentes positions de l'ouvrage de tunnel prédéfini.

5. Procédé de gestion de construction pour un ouvrage de tunnel résilient selon la revendication 4, dans lequel une étape d'analyse et d'obtention de positions identiques et de positions différentes des deux ouvrages de tunnel, le marquage des positions identiques et des positions différentes des deux ouvrages de tunnel comme message de notification, et l'envoi du message de notification à un terminal détenu par la personne responsable, comprend :
l'obtention des différentes positions des deux ouvrages de tunnel ;
l'analyse et l'obtention des combinaisons de composants aux différentes positions ;
l'analyse et la détermination de la sécurité et fiabilité d'utilisation globale des combinaisons de composants en fonction d'une correspondance entre les combinaisons de composants et la fiabilité d'utilisation globale ;
le chargement du message de notification avec les positions identiques et les différentes positions comme annotations, tout en chargeant le message de notification avec une combinaison de composants présentant une fiabilité et une sécurité d'utilisation globale plus élevées comme message recommandé, et l'envoi de l'annotation et du message recommandé au terminal détenu par la personne responsable.

6. Procédé de gestion de construction pour un ouvrage de tunnel résilient selon la revendication 5, dans lequel une étape d'analyse et de détermination de la sécurité et de la fiabilité d'utilisation globale des combinaisons de composants en fonction d'une correspondance entre les combinaisons de composants et la sécurité et fiabilité d'utilisation globale comprend :
l'obtention d'une probabilité de distribution des catastrophes naturelles dans une zone des informations de scène 3D où est situé l'ouvrage de tunnel ;
l'analyse et la détermination de la sécurité et fiabilité d'utilisation globale des combinaisons de composants sous différents types de catastrophes naturelles en fonction d'une correspondance entre les types de catastrophes naturelles, les combinaisons de composants et la sécurité et fiabilité d'utilisation globale ;
l'analyse et la détermination de la sécurité et fiabilité d'utilisation globale effective de la combinaison de composants comme sécurité et fiabilité globale actuelle des combinaisons de composants en fonction de la probabilité de distribution des catastrophes naturelles dans la zone des informations de scène 3D où est situé l'ouvrage de tunnel, et de la sécurité et fiabilité des combinaisons de composants en fonction de différents types de catastrophes naturelles.

7. Procédé de gestion de construction pour un ouvrage de tunnel résilient selon la revendication 6, comprenant en outre, après une étape d'obtention d'un ouvrage de tunnel correspondant aux différences restantes dans les informations de scène 3D historiques et avant une étape d'analyse et de détermination du schéma de gestion de production des composants, les étapes comprenant :
l'analyse pour savoir si l'ouvrage de tunnel correspondant aux différences restantes respectives dans les informations de scène 3D historiques est obtenu ;
dans l'affirmative, l'exécution des étapes suivantes ;
dans la négative, l'interrogation d'informations de scène 3D historiques contenant le plus d'informations similaires aux différences restantes ;
la recherche d'informations de scène 3D historiques contenant les mêmes informations de scène 3D que les différences restantes ;
si rien n'est trouvé, le passage à une étape d'interrogation d'informations de scène 3D historiques contenant le plus d'informations similaires aux différences restantes, jusqu'à ce que les informations de scène 3D historiques soient interrogées ou que l'ouvrage de tunnel correspondant aux différences restantes dans les informations de scène 3D historiques soit obtenu ;
si rien n'est trouvé après l'interrogation des informations de scène 3D historiques, l'envoi des différences restantes comme message de notification au terminal détenu par la personne responsable.

8. Procédé de gestion de construction pour un ouvrage de tunnel résilient selon l'une quelconque des revendications 1 à 7, comprenant en outre des étapes parallèles à une étape d'exécution du schéma de gestion de production des composants, comme suit :
l'obtention d'un stade du schéma de gestion de production des composants en cours d'exécution, le stade du schéma de production comprenant un stade de production et un stade de transport ;
le démarrage d'un dispositif de détection de paramètres de production de composants prédisposés sur les composants, pour détecter des informations sur les matériaux et des informations structurelles des composants, et l'obtention en temps réel d'informations de paramètres de production de composants, si le schéma de gestion de production en cours d'exécution est au stade de la production ;
la comparaison des informations de paramètres de production et d'un nœud temporel du composant obtenus en temps réel, avec des informations prédéfinies de paramètres de production et un nœud temporel prédéfini ;
si un résultat de la comparaison est cohérent, le maintien inchangé du schéma de production en cours d'exécution ;
si le résultat est incohérent, le retraçage pour savoir si les informations de paramètres de production des composants obtenues en temps réel correspondent à des informations de paramètre de production historiques prédéfinies ;
dans l'affirmative, l'évaluation de la vitesse réelle de production des composants pour savoir si elle est inférieure ou supérieure à une norme prédéfinie ;
dans la négative, l'évaluation de l'existence d'un problème dans une production des composants, et l'envoi immédiat d'un message de notification au terminal détenu par la personne responsable ;
si le schéma de gestion de production des composants en cours d'exécution est au stade du transport, le suivi de la position et du nœud temporel des composants en temps réel, l'analyse et la détermination si les composants ont été transportés à une position prédéfinie dans une période de temps prédéfinie ;
dans l'affirmative, l'évaluation que le transport est terminé ;
dans la négative, le retraçage de la position où une déviation de position des composants s'est produite, et envoi de la position au terminal détenu par la personne responsable.

9. Système de gestion de construction pour un ouvrage de tunnel résilient, comprenant une mémoire, un processeur et un programme stocké dans la mémoire et pouvant être exécuté par le processeur, le programme pouvant mettre en œuvre le procédé de gestion de construction pour un ouvrage de tunnel résilient selon l'une quelconque des revendications 1 à 8 lorsqu'il est chargé et exécuté par le processeur.
